# EUROPEAN PATENT APPLICATION

(11) **EP 2 046 014 A2**
(43) Date of publication of application: **08.04.2009**
(21) Application number: 08253132.8
(22) Date of filing: 25.09.2008
(51) Int. Cl.: H04N 1/411, H04N 1/21, H04N 1/32, G06F 17/30

(54) **Image data management device, and method and computer program therefor**

(30) Priority: 02.10.2007 JP 2007258908; 08.07.2008 JP 2008178159
(71) Applicant: Brother Kogyo Kabushiki Kaisha, Nagoya-shi, Aichi-ken 467-8561 (JP)
(72) Inventor: Kawai, Sunao, Nagoya-shi Aichi-ken 467-8562 (JP)
(74) Representative: Smith, Samuel Leonard

(57) **Abstract**

A management device, configured to be connectable with a storage device configured to store therein image data, includes a determining means configured to determine whether the image data stored in the storage device satisfies a predetermined condition, and a size reducing means configured to reduce a size of the image data in accordance with a rule depending on the determination by the determining means.

## Description

### Cross-Reference to Related Application

This application claims priority from Japanese Patent Applications No. 2007-258908 filed on October 2, 2007 and No. 2008-178159 filed on July 8, 2008. The entire subject matters of the applications are incorporated herein by reference.

### Technical Field

The following description relates to one or more techniques to save and manage image data that has been scanned (or transmitted via facsimile), copied, or printed by an image forming device.

### Background

Japanese Patent Provisional Publication No. 2005-210257 discloses a facsimile machine provided with a function of automatically saving a copy of image data transmitted. In the facsimile machine, when a document is set and a command to transmit an image of the document is issued via an operation panel, image data of the document is stored in an image memory and sent to a MODEM. Then, the image data is transmitted to a terminal device as a transmission destination via a public line network.

When a mode for automatically saving image data is previously set, even after facsimile transmission, the image data stored in the image memory is, without being deleted, transmitted to a record control unit, in which data conversion is carried out for the image data to reduce an image thereof. Thereafter, an output from the record control unit is stored into a bitmap memory. At that time, sending source information such as a date and a time of the data transmission is created and stored as header information with the image data. The image data stored (as image data to be saved) in the bitmap memory is saved in a management server. Data left in the image memory are sequentially deleted in an order from a page for which the aforementioned process has been done.

In addition, Japanese Patent Provisional Publication No. 2004-118243 (hereinafter referred to as '243 Publication) discloses a network printing system that includes a print server configured to create and store log information regarding a printing operation based upon print data requested by a client device and user information specifying a user of the client device. Further, '243 Publication discloses that data, which is data into which the print data has been converted and data stored as a print log, can be used for re-printing as needed.

### Summary

In the meantime, recently, with rising momentum to strengthen internal control in a company, it is required to leave information regarding a predetermined operation and data used in the operation so as to find an improper use of the information and data and/or falsification thereof. Further, by leaving the information regarding the predetermined operation and the data used in the operation, it becomes possible to reuse them.

Here, it is supposed that there is a great deal of data to be handled. Not only in the case where the data is saved in a format to secure quality of the data but also even in the case where a capacity of each data to be saved is reduced, as the number of the data increases, a quantity of the data to be saved is greater consequently. Thus, for instance, a company may have a problem of capacity shortage of the management server.

Aspects of the present invention are advantageous to provide one or more improved management devices, and methods and computer programs therefor that make it possible to efficiently utilize a storage capacity of a storage unit thereof.

According to aspects of the present invention, a management device is provided, which is configured to be connectable with a storage device configured to store therein image data. The management device includes a determining means configured to determine whether the image data stored in the storage device satisfies a predetermined condition, and a size reducing means configured to reduce a size of the image data in accordance with a rule depending on the determination by the determining means.

Optionally, the predetermined condition may include a condition regarding a storage period during which the image data has been stored in the storage device.

In some aspects of the present invention, when target image data satisfies a predetermined condition (for example, when the image data satisfies a condition where the storage period of the image data exceeds a predetermined period), the size of the image data is reduced in accordance with a predetermined rule. Therefore, it is possible to efficiently utilize a storage capacity of the storage device.

According to aspects of the present invention, further provided is a method to manage image data stored in a storage device, the method which includes a determining step of determining whether the image data stored in the storage device satisfies a predetermined condition, and a size reducing step of reducing a size of the image data in accordance with a rule depending on the determination made in the determining step.

The method configured as above can provide the same effect as the aforementioned management device. Namely, it is possible to efficiently utilize the storage capacity of the storage device.

According to aspects of the present invention, further provided is computer program comprising computer readable instructions to be executed by a computer connectable with a storage device configured to store therein image data, the instructions causing the computer to perform the aforementioned method.

The computer program configured as above can provide the same effect as the aforementioned management device and method. That is, it is possible to efficiently utilize the storage capacity of the storage device.

### Brief Description of the Accompanying Drawings

Fig. 1 is a schematic diagram showing a configuration of a network connected with a management device in an embodiment according to one or more aspects of the present invention.
Fig. 2 is a block diagram of the network in the embodiment according to one or more aspects of the present invention.
Fig. 3 schematically shows a setting for compressing image data in the embodiment according to one or more aspects of the present invention.
Fig. 4 is a flowchart showing a procedure in which an MEP stores a file into a history management server by a file creating program in the embodiment according to one or more aspects of the present invention.
Fig. 5 is a schematic diagram showing storage locations of image data that are provided in a storage unit of the history management server in the embodiment according to one or more aspects of the present invention.
Fig. 6 is a flowchart showing a procedure of a history management process to be executed with an image history management program in the embodiment according to one or more aspects of the present invention.
Fig. 7 is a schematic diagram showing a compression list in the embodiment according to one or more aspects of the present invention.
Fig. 8 is a flowchart showing a procedure to compress the image data in the embodiment according to one or more aspects of the present invention.
Fig. 9 is a schematic diagram showing the MFP, connected with an external storage device, which serves as a management device in a modification according to one or more aspects of the present invention.
Fig. 10 schematically shows a setting for compressing image data in a modification according to one or more aspects of the present invention.

### Detailed Description

It is noted that various connections are set forth between elements in the following description. It is noted that these connections in general and, unless specified otherwise, may be direct or indirect and that this specification is not intended to be limiting in this respect. Aspects of the invention may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

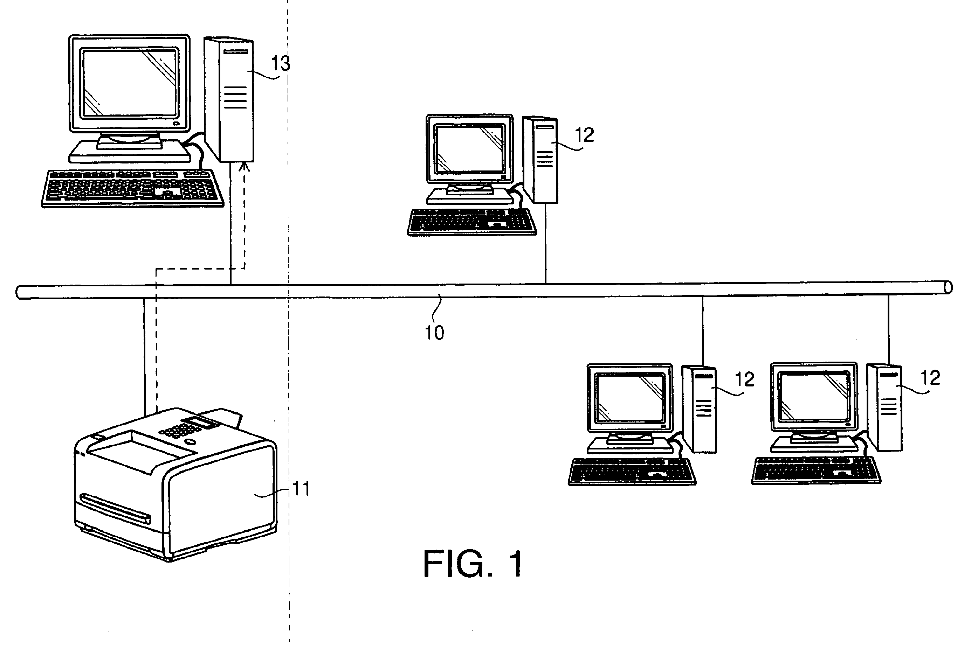

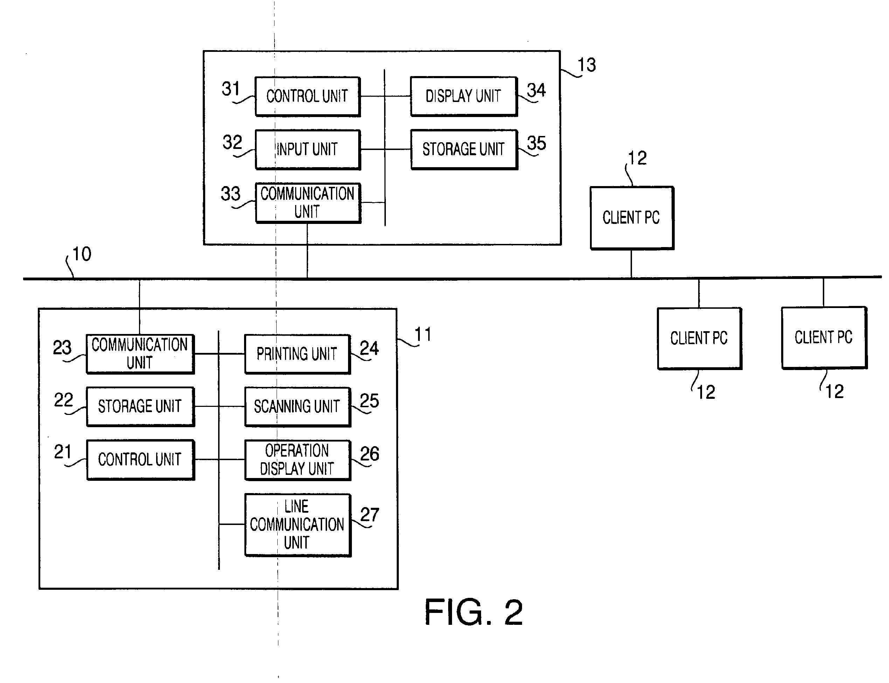

Hereinafter, an embodiment according to aspects of the present invention will be described with reference to the accompany drawings. Fig. 1 is a schematic diagram showing a configuration of a network connected with a management device in an embodiment. Fig. 2 is a block diagram of the network. As illustrated in Figs. 1 and 2, for instance, the network is a local area network (LAN) established in a company, which includes a plurality of devices, connected thereto via a LAN cable 10, such as a multifunction peripheral(MFP) 11, a plurality of client PCs 12, and a server computer serving as a management device (hereinafter referred to as a history management server) 13.

The history management server 13 is provided with a control unit 31 that includes a CPU, a ROM, and a RAM, an input unit 32 that includes a keyboard and a mouse, a communication unit 33 configured to communicate with each device on the network, a display unit 34 that includes an LCD monitor, and a storage unit 35 that includes a hard disk drive (HDD) configured to store therein various programs and data.

Meanwhile, the MFP 11 is provided with a control unit 21 that includes a CPU, a ROM, and a RAM, a storage unit 22 configured to store therein setting information, a communication unit 23 configured to communicate with each device on the network, a printing unit 24 configured to form an image on a sheet in a printing method such as a laser printing method and an inkjet printing method, a scanning unit 25 configured to optically scan a document placed on a document loading unit and create image data, an operation display unit 26 that includes various user-operable keys and a display, and a line communication unit 27 configured to perform data communication with external communication devices via a public line.

The MFP 11 is provided with a plurality of functions such as a facsimile function, a scanner function, a printer function, and a copy function. The MFP 11 includes the operation display unit 26 provided at an upper front side of a main body thereof, and the operation display unit 26 includes input keys for inputting a name of a transmission destination, a facsimile number of the transmission destination, and a mail address of the transmission destination. Further, the operation display unit 26 includes a switch button for switching a mode such as a facsimile mode and a printer mode as well as a start button and a stop button. Especially, in the present embodiment, the operation display unit 26 is provided with a significant key for inputting an identifier (an exceptional keyword) for a below-mentioned reduction process for reducing an image size.

In the printer function of the MFP 11, when the control unit 21 receives a print command with print data from a client PC 12 via the network, image data is created based upon the print data, and a printing operation is performed on a sheet by the printing unit 24 in accordance with the print data. In the scanner function, a document placed on the document loading unit is scanned by the scanning unit 25, and image data representing a scanned image of the document is created and stored in a predetermined device on the network.

In the copy function of the MFP 11, a document placed on the document loading unit is scanned by the scanning unit 25, and image data representing a scanned image of the document is created. Then, the image based upon the image data is printed on a sheet by the printing unit 24. In addition, in the facsimile function, when a fax transmission command is inputted via the operation display unit 26, a document is scanned by the scanning unit 25, and facsimile data is created based upon a scanned image of the document and then transmitted from the line communication unit 27 via the public telephone line network. Meanwhile, when facsimile data is received from an external fax machine via the line communication unit 27, the facsimile data received is converted into image data, and the image data is printed on a sheet by the printing unit 24.

The MFP 11 is provided with a file creating program adopted to create a file of image data created in an operation of each function of the MFP 11 and store the created file in a predetermined location of the history management server 13. Meanwhile, the history management server 13 includes a history management program stored therein that is adopted to perform a reduction process in accordance with a predetermined rule in which a storage period during which image data sent by the MFP 11 has been stored in associated with a reduction rate for reducing a size of the image data.

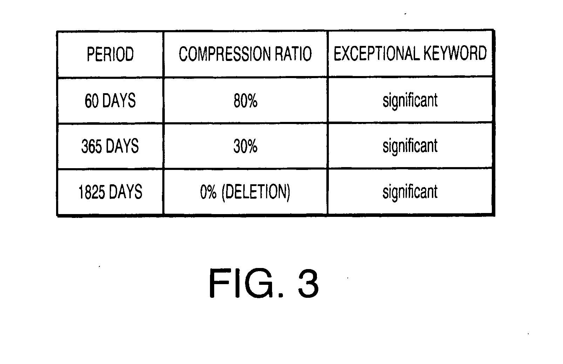

The history management program of the history management server 13 is configured to reduce a size of stored image data by changing a compression ratio of the image data in stages in accordance with a setting as shown in Fig. 3, i.e., depending on a setting period. Specifically, according to the history management program, at a time when a period of 60 days (2 months), 365 days (1 year), or 1825 days (5 years) has elapsed since the image data was stored, the compression ratio of the image data is changed in stages to 80 %, 30 %, or 0 % (deletion), respectively. It is noted that the history management program is configured such that an identifier (an exceptional keyword) is arbitrarily inputted depending on the setting period. Specifically, in a below-mentioned step S115, when the image data is converted into a file with a file name including a character string (an exceptional keyword) "significant," even though a setting period has elapsed, the compression of the image data is prohibited.

For example, it is supposed that the identifier "significant" is inputted only for the setting period of 365 days. In this case, the image data is compressed at the compression ratio 80 % when a storage period for the image data of 60 days (2 months) has elapsed. However, when a storage period of 365 days (1 year) has elapsed, the compression of the image data at the compression ratio 30 % is prohibited owing to the identifier "significant." Accordingly, until a period of 5 years elapses after a period of 60 days has passed, the image data is saved in a state compressed at the compression ratio 80 %. Then, when a period of 5 years has elapsed, the image data is deleted.

Further, when the identifier "significant" is inputted for the setting period of 1825 days, the image data is permanently saved. In this case, when the identifier "significant" is not inputted for any of the other setting periods, the image data is permanently saved after being compressed at a compression ratio of 80 % or 30 %. For example, unless the identifier "significant" is inputted for the setting period of 60 days, the image data is compressed at the compression ratio 80 %. Additionally, unless the identifier "significant" is inputted for the setting period of 365 days, the image data is permanently saved in a state compressed at the compression ratio 30 %. It is noted that, when the identifier "significant" is inputted for all the setting periods, the image data is permanently saved without being compressed.

In addition, the MFP 11 is configured to convert the image data into a file with a file name including the identifier "significant not only via the significant key of the operation display unit 26 based upon a user's intention but also automatically (see S 115). Specifically, for instance, specific characters "FOR INTERNAL USE ONLY" are stored as a keyword in a predetermined area of the storage unit 22. Then, the control unit 21 determines through a character analysis whether the characters corresponding to the keyword are included in the image data scanned by the scanning unit 25. When it is determined that the characters corresponding to the keyword are included in the image data, the image data is automatically converted into a file with a file name including the identifier "significant" (see S 115).

Further, the MFP 1 is configured to automatically convert data stored in a predetermined storage device (a predetermined folder) on the network via the LAN cable 10 into a file with a file name including the identifier "significant" (see S 115). Namely, the storage unit 22 stores a predetermined storage location as a keyword in a predetermined area thereof. When the control unit 21 determines, for example, that data to be printed is identical to data stored in the predetermined storage location stored as a keyword in the storage unit 22, the data to be printed is automatically converted into a file with a file name including the identifier "significant" (see S 115). Furthermore, an identification symbol is stored as a keyword in a predetermined area of the storage unit 22. The control unit 21 determines whether a file name of the data to be printed includes the identification symbol. When it is determined that the file name of the data to be printed includes the identification symbol, the data is automatically converted into a file with a file name including the identifier "significant" (see S 115). It is noted that the data to be printed includes a storage location and a file name as relevant information thereof.

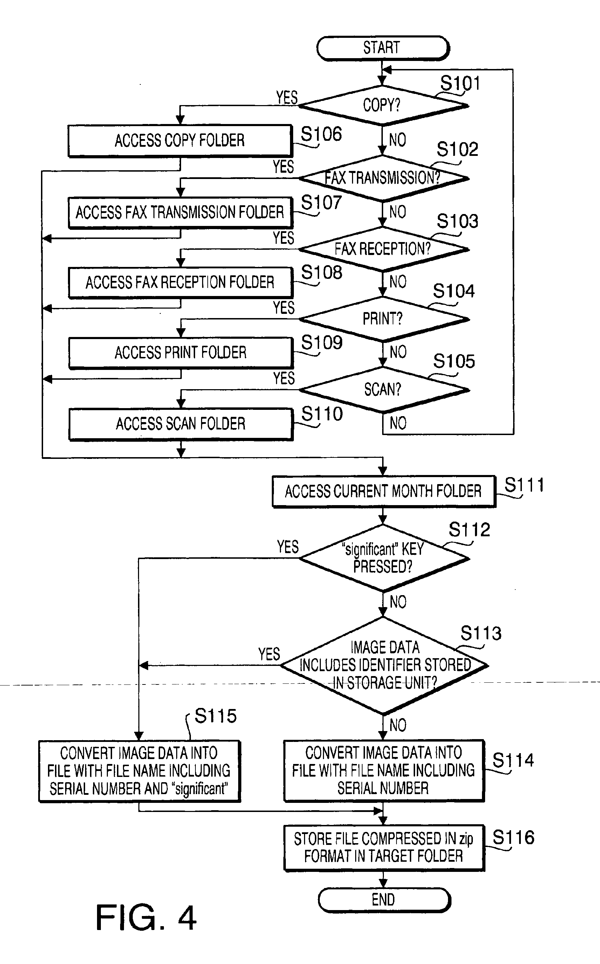

Next, a file creating program to be executed by the MFP 1 will be described. Fig. 4 is a flowchart showing a procedure in which the MFP 11 stores a file into the history management server 13 by the file creating program.

As described above, the MFP 11 performs a operation of each function such as the copy function. The control unit 21 always monitors the operation. Specifically, the control unit 21 always monitors each of whether a copy operation is performed (S101), whether fax transmission is performed (S102), whether fax data is received (S103), whether a printing operation is performed (S104), and whether a scanning operation is performed (S105). When any of the operations is not recognized (S101-S105: No), the above monitoring is repeatedly carried out.

Meanwhile, either of the operations is recognized, the MFP 11 accesses the history management server 13 via the network. Specifically, the MFP 11 accesses a predetermined one of folders provided as storage locations of image data in the storage unit 35 of the history management server 13.

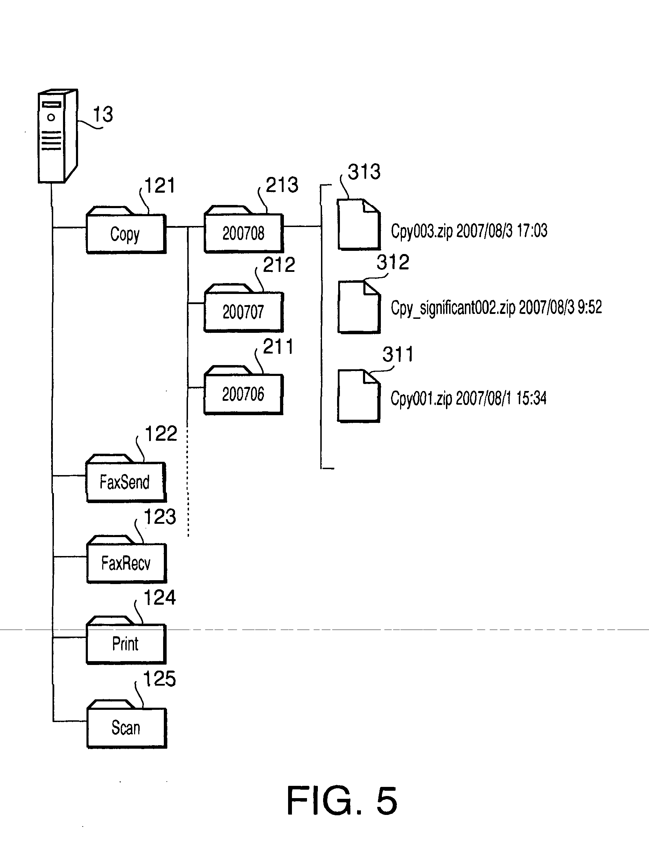

Fig. 5 is a schematic diagram showing storage locations of image data that are provided in the storage unit 35 of the history management server 13. Thus, the storage unit 35 is provided with folders of respective folder names that correspond to the respective operations of the MFP 11. Specifically, the storage unit 35 includes a copy folder 121 to store therein copied images, a fax transmission folder 122 and a fax reception folder 123 that are prepared to store therein facsimile images, a print folder 124 to store therein print images, and a scan folder 125 to store therein scanned images.

When performing a copy operation (S101: Yes), the MFP 11 accesses the copy folder 121 of the history management server 13 (S106). When performing fax transmission without executing a copy operation (S102: Yes), the MFP 11 accesses the fax transmission folder 122 of the history management server 13 (S107). When fax data is received without performing a fax transmission as well (S103: Yes), the MFP 11 accesses the copy folder 123 of the history management server 13 (S108). When performing a printing operation without receiving any fax data (S104: Yes), the MFP 11 accesses the print folder 124 of the history management server 13 (S109). When performing a scanning operation without performing a printing operation (S105: Yes), the MFP 11 accesses the scan folder 125 of the history management server 13 (S 110).

In the meantime, in the history management server 13, as illustrated in Fig. 5, each of the respective folders (operation folders) 121 to 125 provided for the operations includes month folders 211, 212, 213,□□□each of which is automatically created in a lower hierarchy every month. Accordingly, for example, the MFP 11 accesses the month folder 211 provided under each of the operation folders 121 to 125 (S111). Each month folder is given a folder name represented with a six-digit number as a combination of a year and a month. For instance, the month folder 213 created in August 2007 has a folder name "200708." Accordingly, when a copy operation is performed in August 2007, the MFP 11 accesses the month folder 213.

Subsequently, the MFP 11 converts image data used as target data in a copy operation or a fax operation into a file with a file name attached thereto. In that time, the conversion of the image data into a file is made with conditions or without any condition. Thus, the MFP 11 checks whether any condition is given in each operation (S 112 and S113). Specifically, in S 112, it is checked whether the significant key of the operation display unit 26 has been pressed in an operation such as a copy operation and fax transmission. Meanwhile, when a document is transmitted via fax, even though the significant key is not pressed, in S 113, the control unit 21 determines through the character analysis whether characters corresponding to a keyword stored in the storage unit 22 are included in image data scanned.

Then, in a step of converting the image data into a file after that (S 114 or S 115), a name of a function performed by the MFP 11 and a three-digit serial number in the present month for each function are added to a name of the file. When the significant key has not been pressed in the copy operation (S 112: No), and any keyword stored in the storage unit 22 is not recognized (S 113: No), for instance, a file name as shown by files 311 or 313 in Fig. 5 is given (S 114). Namely, the file name of the file 311 or 313 includes characters "Cpy" that represent execution of the copy function and a serial number "001" or "003" that represents a first one or a third one of copy operations performed in August 2007, respectively.

Meanwhile, when the significant key has been pressed in the copy operation (S112: Yes) or a keyword stored in the storage unit 22 is recognized in the image data scanned (S 113: Yes), as shown by a file 312 in Fig. 5, the characters "significant" is added to a file name of the file 312 (S 115). Thus, the file name includes the characters "significant" added between the characters "Cpy" that represent execution of the copy function and a serial number "002" that represents a second one of the copy operations performed in August 2007. It is noted that the file name given in S 114 or S115 may include a file name (hereinafter referred to as an original name) of the image data used as target data in the operation. In this case, in a file name list for managing files deleted in a below-mentioned step S207, it is possible to specify what kind of information is included in a deleted file, based upon an original name of the deleted file.

Next, the file, into which the image data is converted in S 114 or S 115, is compressed in a zip format in the present embodiment. The compressed file is stored into a predetermined folder of the history management server 13 as illustrated in Fig. 5 (S 116). In the above example, the compressed file is stored into the folder 213 created in August 2007 that is provided under the copy folder 121. It is noted that the file into which the image data is converted may be stored into the predetermined folder of the history management server 13 without compressing it. Further, the file may be compressed in a different format other than the zip format.

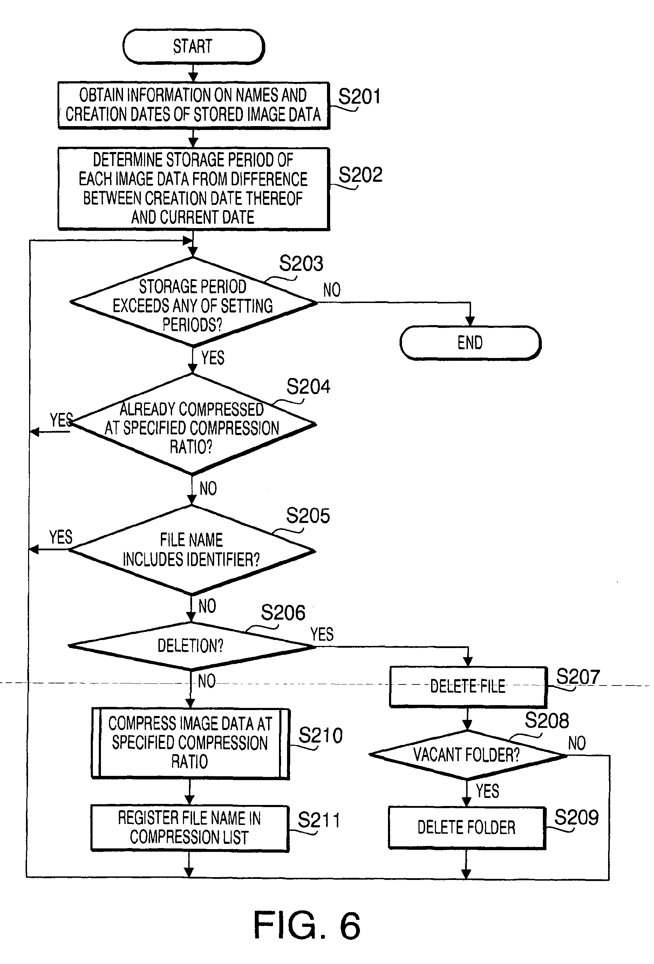

Thus, image data is transmitted as a file with a predetermined file name attached thereto by the MFP 11 to the history management server 13, and sequentially stored into a predetermined folder of the storage unit 35. On the other hand, in the history management server 13, image data stored therein is compressed at a predetermined compression ratio depending on an elapsed period in order to reduce the capacity of the image data in stages. Such a compressing operation is performed by the control unit 31, more specifically, with an image history management program that executes a history management process shown in Fig. 6. For example, the history management server 13 executes the history management process once a day to manage images stored therein.

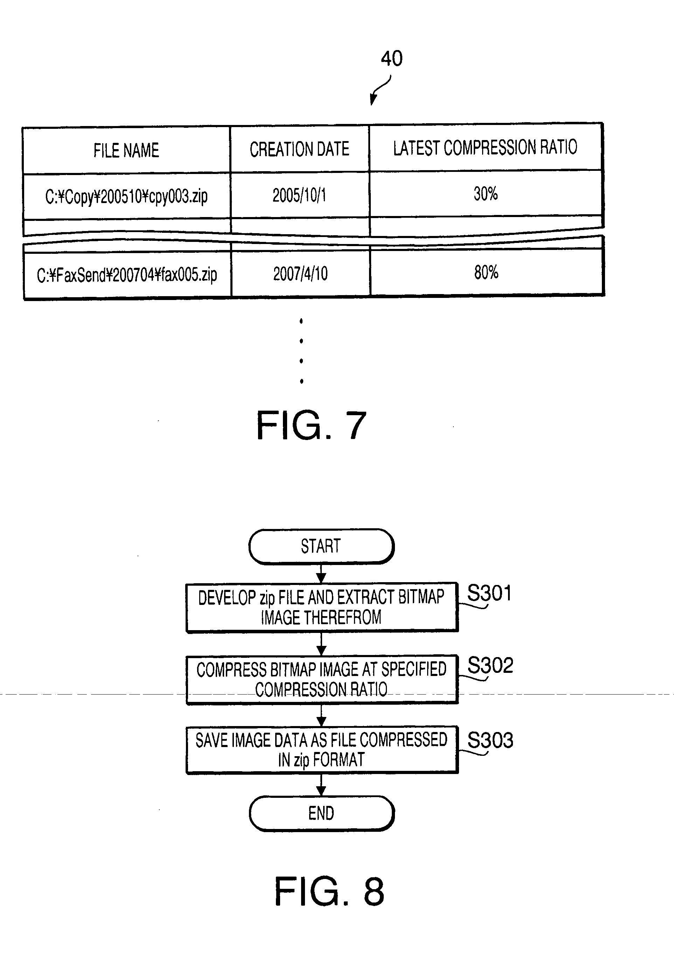

In the history management process, firstly, management list information (see a compression list 40 in Fig. 7) that includes file names and creation dates of all image data stored is taken out from the storage unit 35 (S201). Then, a storage period at a present time is determined for each stored image data on the basis of a creation date of a file of each image data and a current date (S202). By comparing the storage period of each file with the setting periods, it is determined whether there is a file of which the storage period exceeds any of the setting periods (S203). When there is no file of which the storage period exceeds any of the setting periods (S203: No), it is determined that all the files have already been checked, and the history management process is terminated.

Meanwhile, when there is a file of which the storage period exceeds any of the setting periods (S203: Yes), it is determined whether the image data is compressed at a specified compression ratio (S204). The history management server 13 includes the compression list 40 created therein, as shown in Fig. 7. When a setting period has elapsed and a compressing operation is executed, the operation is additionally recorded in the compression list 40. Therefore, by referring to the compression list 40, it is possible to confirm a compression status of each image data. When it is determined from the compression list 40 that image data included in a target file has already been compressed (S204: Yes), the present process goes back to S203, in which it is determined whether there is another file of which the storage period exceeds any of the setting periods.

Meanwhile, when it is determined from the compression list 40 that the image data of the target file has not been compressed (S204: No), it is determined whether an identifier is included in a file name of the target file (S205). In the case where the image data is saved as a file of which a file name includes the identifier "significant" as the file 312 shown in Fig. 5, it is determined in S205 whether the file name of the target file includes the identifier "significant." When the file name includes the identifier "significant" (S205: Yes), the present process goes back to S203. Such determination in S205 comes from that the identifier "significant" is set for all the setting periods, as shown in Fig. 3, in the present embodiment. Meanwhile, when the file name does not include the identifier "significant" (S205: No), the present process advances to S206. In S206, it is determined whether to delete the target file. Specifically, in the present embodiment, it is judged in S206 whether a setting period applied in the determination in S203 is the setting period of 1825 days (namely, whether the storage period of the target file exceeds the setting period of 1825 days). When it is determined that the target file is to be deleted (S206: Yes), the present process advances to S207. Meanwhile, when it is determined that the target file is not to be deleted (S206: No), the present process advances to S210.

In S207, in order to delete the image data, the corresponding file thereof is deleted. Further, it is determined whether there is any file in the month folder in which the file had been present (S208). When all files have been deleted and the month folder is vacant (S208: Yes), the vacant month folder is also deleted (S209).

In the storage unit 35, a file name list to save therein file names of files deleted in the aforementioned manner is provided. When the image data is deleted in S207, the file name of the image data is additionally recorded into the list. Meanwhile, when there is a file left in the month folder (S208: No), the present process goes back to S203, in which it is determined whether there is a file of which the storage period exceeds any of the setting periods.

Additionally, in S210, the image data is compressed at a compression ratio corresponding to a setting period that the storage period of the image data is determined to exceed in S203. Specifically, when the storage period of the image data exceeds 60 days (2 months), the image data is compressed at the compression ratio 80 %. When the storage period of the image data exceeds 365 days (1 year), the image data is compressed at the compression ratio 30 %. Fig. 8 is a flowchart showing a procedure to compress the image data in S210.

As mentioned above, the image data is stored in the history management server 13 as a file compressed in the zip format by the MFP 11. In order to compress the image data, firstly, the zip file is developed and the bitmap image data is extracted therefrom (S301). In a compressing operation corresponding to the setting period of 60 days, the image data of 100 % is compressed at the compression ratio 80 %. In a compressing operation corresponding to the setting period of 365 days, the image data, which has been compressed at the compression ratio 80%, is compressed to attain the compression ratio 30 % (S302). Thus, the image data compressed as above is saved as a file re-compressed in the zip format in the original folder in an overwriting manner (S303).

Each time the compressing operation is performed for a single piece of image data, information on the image data is registered in the compression list 40 shown in Fig. 7 (S211). In the compression list 40, a file name, a file creation date in the MFP 11, and a compression ratio in the currently performed compression as a latest compression ratio are inputted. It is noted that a file name shown at a top of the compression list 40 represents that corresponding image data is stored in a month folder "200510" created in October 2005 under a copy folder "Copy" in a drive C, as the third file "copy003"created through the copy operation in the same month.

Referring back to Fig. 6, after the compressing operation is performed for the image data, the present process goes back to S203, in which it is determined whether there is a file of which the storage period exceeds any of the setting periods. For a file, with no identifier included in a file name thereof, of which the storage period exceeds any of the setting periods, the steps of S204 to S211 are performed in the same manner as above. Thereafter, when there is no file of which the storage period exceeds any of the setting periods (S203: No), the history management process is terminated. The above description regarding Fig. 6 has given based upon Fig. 3 in which the identifier "significant" is set for all the setting periods. However, the identifier "significant" may be set only for a predetermined setting period. For example, the identifier "significant" may not be set for the setting period of 60 days. In this case, a following determination is made in S205 of Fig. 6. For instance, when a target file has a file name including "significant," a storage period thereof exceeds the setting period of 60 days, and a negative determination is made in S204, since the identifier "significant" is not set for the setting period of 60 days, even though the file name includes "significant," a negative determination is made in S205 (S205: No). Then, the present process advances to S206, and thereafter the same steps as described above are executed.

According to the present embodiment, by saving image data copied or faxed, it is possible to utilize the image data when it is needed. For example, when a user attempts to confirm what the image data represents or to fax the image data again, such image data can be utilized. However, in most cases, a utility value (frequency of reuse) of such information decreases as time goes by. For this reason, in the present embodiment, the compression ratio of the image data, of which the utility value declines as time passes, is reduced in stages to lessen a capacity of the image data. Thereby, it is possible to cover shortage of a storage capacity of the history management server 13. On the other hand, in order to reproduce significant image data in a crisp state, the compression of the image data is restricted depending on significance of the image data. Further, when significant image data is handled, the image data is stored such that the compression of the image data is restricted through the automatic recognition of the identifier included in a file name of the image data. Therefore, it is possible to leave the image data, for example, as an evidence of an unauthorized use of the image data.

Hereinabove, the embodiments according to aspects of the present invention have been described. The present invention can be practiced by employing conventional materials, methodology and equipment. Accordingly, the details of such materials, equipment and methodology are not set forth herein in detail. In the previous descriptions, numerous specific details are set forth, such as specific materials, structures, chemicals, processes, etc., in order to provide a thorough understanding of the present invention. However, it should be recognized that the present invention can be practiced without reapportioning to the details specifically set forth. In other instances, well known processing structures have not been described in detail, in order not to unnecessarily obscure the present invention.

Only exemplary embodiments of the present invention and but a few examples of its versatility are shown and described in the present disclosure. It is to be understood that the present invention is capable of use in various other combinations and environments and is capable of changes or modifications within the scope of the inventive concept as expressed herein. For example, according to aspects of the present invention, the following changes and modifications are possible.

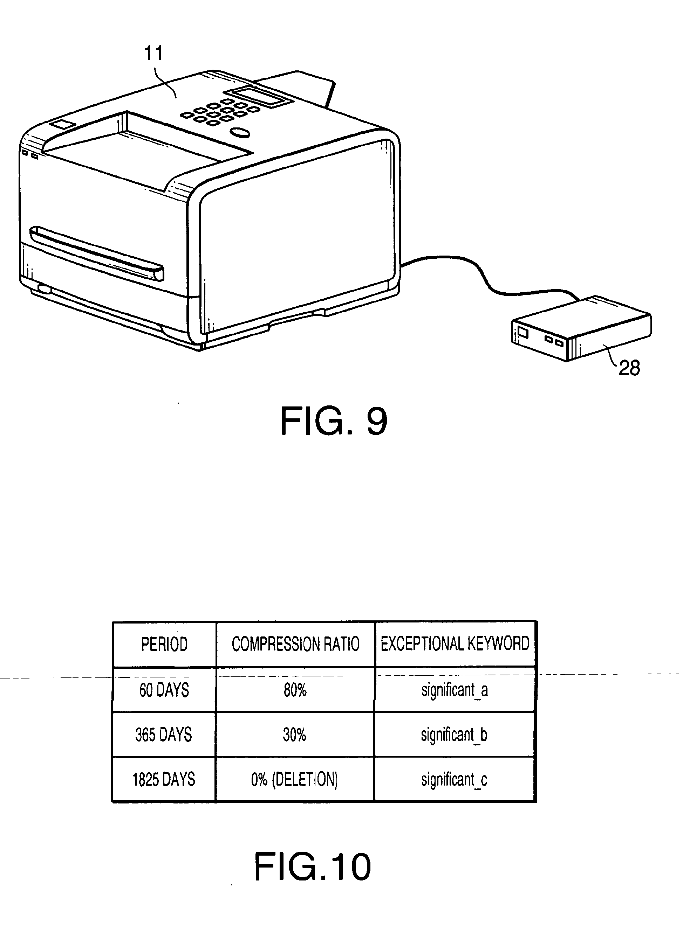

In the aforementioned embodiment, the history management server 13 serves as a management server. However, for example, the MFP 11 connected with an external storage device 28 as shown in Fig. 9 may serve as a management server. In this case, the month folders 211, 212, and 213 shown in Fig. 5 are created in the storage device 28. Then, image data is stored into the month folders 211, 212, and 213 as a file created in accordance with the procedure shown in Fig. 4 as described above. Further, in this case, the MFP 11 includes the image history management program stored in the storage unit 11 thereof, and performs the history management process shown in Fig. 6. Therefore, in this case as well, by saving image data copied or faxed in the storage device 28, it is possible to utilize the image data when it is needed. Additionally, since the compression ratio of the image data is reduced in stages to lessen a capacity of the image data, the same effect as the aforementioned embodiment can be provided in this case. Namely, it is possible to cover shortage of a capacity of the storage device 28.

Further, in the aforementioned embodiment, image data is converted into a file with a file name including the identifier that provides the restriction in compressing the image data. Alternatively, a list with a flag given thereto as an identifier may be created. For example, when image data is stored in a predetermined folder of the history management server 13 as shown in Fig. 5, a compression list as illustrated in Fig. 7 may be created and stored in the storage unit 35. The compression list may include a flag section, in which a flag is given depending on the setting periods shown in Fig. 3. Accordingly, in the history management process shown in Fig. 6, by checking a status of the flag section of target image data, it is determined whether to compress the target image data. In general, when a predetermined identifier is associated with the target image data, a size of the target image data may be reduced in a restricted manner.

Further, in the aforementioned embodiment, when the compression ratio of image data is changed in stages, the zip format is exemplified as a compression format for compressing a file into which the image data is converted. However, the compression format may include other formats such as a lossless compression format in which there is no change found in image quality between before and after a compressing operation or an expanding operation for the image data, and an original image of the image data can completely be restored after the expanding operation and a lossy compression format in which it is possible to attain a lower compression ratio (more compressed image data), yet the original image of the image data cannot completely be restored after the expanding operation. For instance, a JPEG format may be employed as the lossy compression format, and a GIF format may be employed as the lossless compression format.

In order to reduce the size of the image data, a pixel skipping operation may be performed for the image data as well as the compressing operation described in the aforementioned embodiment. For example, in the pixel skipping operation, pixel data is deleted every some lines in each of vertical and horizontal directions of the image data to create new image data. It is noted that, preferably, following the pixel skipping operation, an interpolating operation may be executed. Furthermore, the size of the image data may be reduced by decreasing the number of gray levels (i.e., tone levels) or the number of colors of the image data. For instance, the number of gray levels of the image data may be reduced in stages depending on predetermined setting periods from 1024 shades of gray to 256 shades of gray. Further, the number of colors of the image data may be reduced in stages depending on predetermined setting periods from a color image to a monochrome image. In addition, the size of the image data may be reduced by a combination of various operations. For example, when the storage period of the image data is relatively short, the compressing operation may be performed for the image data. Meanwhile, when the storage period of the image data is relatively long, the pixel skipping operation, the operation of reducing the number of gray levels, or the operation of reducing the number of colors may be performed for the image data. It is noted that the "size" of the image data denotes a data size of the image data, i.e., a data capacity of the image data.

Further, in the above description, the history management server 13 or the storage device 28 connected with the MFP 11 is provided as a storage location to store the image data. However, a client PC 12 on the network may be specified as the storage location. Additionally, the setting periods, the compression ratios, or the number of steps for compressing the image data in stages may be arbitrarily set.

In addition, "significant_a," "significant_b," and "significant_c," may be set as identifiers as shown in Fig. 10. Such a setting can provide wide variations to the determination in S113. For instance, it is supposed that specific characters "FOR CORPORATE USE ONLY," "FOR DIVISIONAL USE ONLY," and "CONFIDENTIAL" are stored as keywords in the predetermined area of the storage unit 22. In this case, when "FOR CORPORATE USE ONLY" is recognized in the step S 113, target image data may be converted into a file with a file name including "significant_a." Meanwhile, when "FOR DIVISIONAL USE ONLY" is recognized in S113, the image data may be converted into a file with a file name including "significant_b." Furthermore, when "CONFIDENTIAL" is recognized in S113, the image data may be converted into a file with a file name including "significant_c." Thereby, depending on the type of the keyword recognized, it is possible to change the setting of the compressing operation.

Further, for instance, it is supposed that predetermined storage locations x, y, and z are stored as keywords in the predetermined area of the storage unit 22. In this case, when the storage location x is recognized in the step S 113, the image data may be converted into a file with a file name including "significant_a." Meanwhile, when the storage location y is recognized in S 113, the image data may be converted into a file with a file name including "significant_b." Furthermore, when the storage location z is recognized in S113, the image data may be converted into a file with a file name including "significant_c." Thereby, depending on the type of the keyword recognized, it is possible to change the setting of the compressing operation.

When identification symbols x, y, and z are stored as keywords in the predetermined area of the storage unit 22, for example, in the case where the identification symbol x is recognized in S 113, the image data may be converted into a file with a file name including "significant_a" in the same manner as described above. It is noted that, in S205, it may be determined whether an identifier ("significant_a," "significant_b," or "significant_c") corresponding to a setting period which a storage period of a target file is determined to exceed is included in a file name of the target file.

Further, when "significant_a," "significant_b," and "significant_c," are set as identifiers as illustrated in Fig. 10, two or more identifiers may be set for a single setting period. Specifically, for example, "significant_a" and "significant_b" may be set as an identifier for the setting period of 60 days. Such a setting can provide wider variations to the determination in S 113.

## Claims

1. A management device configured to be connectable with a storage device configured to store therein image data, comprising:
a determining means configured to determine whether the image data stored in the storage device satisfies a predetermined condition; and
a size reducing means configured to reduce a size of the image data in accordance with a rule depending on the determination by the determining means.

2. The management device according to claim 1,
wherein the predetermined condition includes a condition regarding a storage period during which the image data has been stored in the storage device.

3. The management device according to claim 2,
wherein the determining means is configured to determine whether the storage period of the image data exceeds a first period, and
wherein the size reducing means is configured to reduce the size of the image data at a first reduction ratio when the determining means determines that the storage period of the image data exceeds the first period.

4. The management device according to claim 3,
wherein the determining means is configured to determine whether the storage period of the image data exceeds a second period longer than the first period, and
wherein the size reducing means is configured to reduce the size of the image data at a second reduction ratio smaller than the first reduction ratio when the determining means determines that the storage period of the image data exceeds the second period, the second reduction ratio being a ratio at which the image data is more reduced than at the first reduction ratio.

5. The management device according to claim 4,
wherein the determining means is configured to determine whether the storage period of the image data exceeds a third period longer than the second period, and
wherein the size reducing means is configured to delete the image data when the determining means determines that the storage period of the image data exceeds the third period.

6. The management device according to claim 5, further comprising a registration means configured to, when the image data is deleted by the size reducing means, register a file name of the deleted image data with a list stored in the storage device.

7. The management device according to claim 2,
wherein the determining means is configured to determine whether the storage period of the image data exceeds a predetermined period,
wherein the size reducing means is configured to reduce the size of the image data at a reduction ratio depending on the storage period of the image data when the determining means determines that the storage period of the image data exceeds the predetermined period.

8. The management device according to any of claims 1 to 7,
wherein the predetermined condition includes a condition regarding whether a predetermined identifier is associated with the image data.

9. The management device according to claim 8,
wherein the determining means is configured to determine whether the predetermined identifier is associated with the image data, and
wherein the size reducing means is configured to leave the image data as it is without reducing the size of the image data when the determining means determines that the predetermined identifier is associated with the image data.

10. The management device according to claim 9,
wherein the predetermined period includes a plurality of setting periods,
wherein the determining means is configured to determine whether the storage period of the image data exceeds any of the setting periods,
wherein, when the determining means determines that the storage period of the image data exceeds any of the setting periods, the determining means is configured to determine whether the predetermined identifier is associated with a setting period which the storage period is determined to exceed, and
wherein the size reducing means is configured to leave the image data as it is without reducing the size of the image data when the determining means determines that the predetermined identifier is associated with the image data and the setting period which the storage period is determined to exceed.

11. The management device according to any of claims 1 to 10,
wherein the size reducing means is configured to reduce the size of the image data by compressing the image data.

12. The management device according to any of claims 1 to 10,
wherein the size reducing means is configured to reduce the size of the image data by decreasing a numerical number of pixels included in the image data.

13. The management device according to any of claims 1 to 12, further comprising the storage device provided therein.

14. A method to manage image data stored in a storage device, comprising:
a determining step of determining whether the image data stored in the storage device satisfies a predetermined condition; and
a size reducing step of reducing a size of the image data in accordance with a rule depending on the determination made in the determining step.

15. A computer program comprising computer readable instructions to be executed by a computer connectable with a storage device configured to store therein image data, the instructions causing the computer to perform the method according to claim 14.
